(19) Europäisches Patentamt

European Patent Office

Office européen des brevets

(11) Veröffentlichungsnummer: **0 396 979 B1**

(12) **EUROPÄISCHE PATENTSCHRIFT**

(45) Veröffentlichungstag der Patentschrift: **12.10.94**

(51) Int. Cl.⁵: **B65G  47/244**

(21) Anmeldenummer: **90108034.1**

(22) Anmeldetag: **27.04.90**

(54) **Verfahren und Fördervorrichtung zur Förderung von Gegenständen.**

(30) Priorität: **10.05.89 DE 3915246**

(43) Veröffentlichungstag der Anmeldung:
**14.11.90 Patentblatt  90/46**

(45) Bekanntmachung des Hinweises auf die
Patenterteilung:
**12.10.94 Patentblatt  94/41**

(84) Benannte Vertragsstaaten:
**DE FR GB IT**

(56) Entgegenhaltungen:
**AT-B- 229 787**
**GB-A- 2 185 954**
**US-A- 3 621 974**
**US-A- 3 858 716**

**PATENT ABSTRACTS OF JAPAN vol. 9, no.
98 (M-375)(1821) 27 April 1985,& JP-A-59
223623 (DAIICHI KOGYO) 15 Dezember 1984**

(73) Patentinhaber: **Focke & Co. (GmbH & Co.)**
**Siemensstrasse 10**
**D-27283 Verden (DE)**

(72) Erfinder: **Focke, Heinz**
**Moorstrasse 64**
**D-2810 Verden (DE)**

(74) Vertreter: **Bolte, Erich, Dipl.-Ing. et al**
**Meissner, Bolte & Partner**
**Patentanwälte**
**Hollerallee 73**
**D-28209 Bremen (DE)**

EP 0 396 979 B1

## Beschreibung

Die Erfindung betrifft ein Verfahren zur Förderung von Packungen entlang einer Förderbahn, wobei die Packungen gedreht und dabei in zwei Reihen nebeneinander transportiert werden. Weiterhin betrifft die Erfindung eine Fördervorrichtung.

Bei der Förderung von Gegenständen entlang einer Förderbahn tritt häufig das Problem auf, daß die Gegenstände in eine andere Relativstellung zueinander oder zu Arbeitseinrichtungen gebracht werden müssen. Insbesondere tritt dieses Problem häufig im Rahmen der Verpackungstechnik auf.

Aus der GB-A-2 185 954 ist eine Fördereinrichtung bekannt, bei der parallel nebeneinanderliegende Träger gemeinsam um eine senkrechte Achse, und zwar um jeweils 90°, drehbar sind. Änderungen der Relativstellung der Packungen einer Reihe gegenüber der Packungen der anderen Reihe sind damit nicht möglich.

Der Erfindung liegt daher die Aufgabe zugrunde, die Änderung der Relativstellung von Packungen zueinander benachbarter Reihen zu ermöglichen.

Die Aufgabe wird erfindungsgemäß dadurch gelöst, daß zur Änderung der Relativstellung benachbarter Packungen jede Packung der einen Reihe um 180° gedreht wird und jede Packung der anderen Reihe in ihrer Ausrichtung unverändert bleibt. Vorteilhafterweise werden die zu drehenden Packungen der Reihe nach mit einer Relativgeschwindigkeit entlang eines sich in Förderrichtung erstreckenden Leitorgans derart bewegt, daß sich dabei Wälzelemente am Leitorgan abwälzen, deren Wälzbewegungen in die Drehungen der jeweils zugeordneten Packungen umgesetzt werden.

Bei dem erfindungsgemäßen Verfahren wird mit Vorteil für jeden einzelnen der zu drehenden Gegenstände eine kontrollierte Drehung um die Achse durchgeführt. Kontrolliert ist die Drehung unter anderem deshalb, weil der Drehwinkel, um den jeder Gegenstand gedreht wird, durch die Länge des sich erstreckenden Leitorgans und/oder die Fördergeschwindigkeit genau vorgegeben werden kann, wobei auch der Radius der Wälzelemente eingeht.

Das erfindungsgemäße Verfahren hat insbesondere den Vorteil, daß die Gegenstände beim kontinuierlichen Fördervorgang definiert gedreht werden können. Es ist also beispielsweise nicht notwendig, den eigentlichen Fördervorgang so lange zu unterbrechen, bis die Drehung durchgeführt ist.

Eine nächste Weiterbildung des erfindungsgemäßen Verfahrens sieht vor, daß das Leitorgan in seiner Erstreckungsrichtung bewegt wird. Dabei kann sich das Leitorgan in Förderrichtung oder in der Gegenrichtung bewegen. Wichtig ist, daß zwischen den geförderten Gegenständen und dem Leitorgan eine möglichst genau definierbare Relativgeschwindigkeit verbleibt. Auch die Geschwindigkeit des Leitorgans kann bei dem erfindungsgemäßen Verfahren zur Vorgabe des Drehwinkels der Gegenstände verwendet werden, wozu die Geschwindigkeit des Leitorgans vorzugsweise regelbar ist.

Das Leitorgan kann beispielsweise ein umlaufender Gurt oder Zahnriemen sein, von dem das den zu drehenden Gegenständen zugewandte Trum, welches sich in Längsrichtung der Förderbahn erstreckt, das eigentliche Leitorgan für die Wälzelemente ist. Das Leitorgan wird vorzugsweise in Bewegungsrichtung geführt.

Eine nächste Weiterbildung des erfindungsgemäßen Verfahrens sieht vor, daß die Wälzelemente aufweisenden Träger für die Gegenstände außerhalb des Bereiches des Leitorgans in Förderrichtung geführt werden. Die Träger können auf nahezu beliebige Weise zum Tragen der Gegenstände ausgebildet sein, was sich auch nach der Ausbildung der Gegenstände selbst richtet. Diese Träger sind außerhalb des Bereiches des Leitorgans geführt, um die Wälzelemente in der richtigen Position an den Anfang des Leitorgans zu führen bzw. um die Träger nach Passieren des Leitorgans wieder in Förderrichtung weiterzuführen. Es können somit Führungen vor und/oder nach dem Leitorgan vorgesehen sein.

Dabei können die Führungen insbesondere so ausgebildet sein, daß durch die Führungen in den Bereichen vor und nach dem Leitorgan eine Drehung der Gegenstände verhindert wird. Auch im Bereich des Leitorgans könnten Führungen vorgesehen sein, die dann jedoch so ausgebildet sein müssen, daß sie die Wälzbewegung der Wälzelemente und die Drehung der übertragenden Teile zulassen und die Träger lediglich in Förderrichtung zwangsführen.

Eine Fördervorrichtung mit einer Förderbahn, insbesondere zur Durchführung des erfindungsgemäßen Verfahrens, für die auch selbständiger Schutz beansprucht wird, ist dadurch gekennzeichnet, daß nur die Träger der einen Reihe drehbar sind, während die Träger der anderen Reihe nicht drehbar sind. Bezüglich weiterer erfindungsgemäßer Vorrichtungsmerkmale wird auf die Unteransprüche verwiesen.

Die Träger können beispielsweise Teller besitzen, auf die die Gegenstände aufgelegt werden, es können aber auch Aufnahmetaschen, Hakenelemente oder dergleichen zum Halten der Gegenstände vorgesehen sein.

Ein einfach ausgebildeter Träger könnte beispielsweise ein Teller sein, der drehbar gelagert ist, den Gegenstand, den er trägt, radial überragt und einen Kreisumfang aufweist, um selbst als Wälzelement fungieren zu können.

Das Leitorgan und die Wälzelemente können aufeinander abgestimmte Reibschlußelemente, beispielsweise Reibrad und Reibfläche sein, sie können aber auch aufeinander abgestimmte Formschlußelemente sein, beispielsweise ein Zahnrad und eine Zahnstange oder ein umlaufender Zahnriemen.

Das Leitorgan ist vorzugsweise zu einer Bewegung in seiner Erstreckungsrichtung antreibbar. Die Bewegung kann dabei in Förderrichtung oder entgegen der Förderrichtung erfolgen, um eine Relativgeschwindigkeit zwischen den geförderten Gegenständen und dem Leitorgan zu erzielen. Die Geschwindigkeit des Leitorgans ist vorzugsweise regelbar. Die Umlaufrichtung des Leitorgans ist vorzugsweise umkehrbar.

Bei einer bevorzugten Ausbildung der erfindungsgemäßen Fördervorrichtung ist jeder Träger für einen Gegenstand um seine eigene, zur Förderrichtung senkrechte Achse drehbar und sitzt das zugehörige Wälzelement drehfest auf einer entsprechenden Welle. Der derart ausgebildete Träger ist einfach und kostengünstig zu fertigen. Fördereinrichtungen können daher rentabel derartige Träger aufweisen, auch wenn nicht immer und jeder Gegenstand, der gefördert wird, gedreht werden muß.

In der Regel wird für jeden zu drehenden Gegenstand ein eigener Träger vorgesehen. Der Träger kann zur Übertragung der Förderbewegung auf den Gegenstand selbst wiederum an einem Förderband oder dergleichen gelagert sein, derart, daß er vom Förderband in Förderrichtung mitgenommen wird, aber zumindest im Bereich des Leitorgans auch eine Drehbewegung um seine Achse möglich ist.

Jeder Träger weist vorzugsweise eine Tasche für den Gegenstand auf, um ein Verrutschen des Gegenstandes bei der Drehung zu verhindern. Das Leitorgan ist in seiner Bewegungsrichtung vorzugsweise geführt. Die Führung kann bei einem flexiblen Leitorgan als Widerlager für die Wälzelemente dienen.

Auch für die Träger ist außerhalb des Erstreckungsbereiches des Leitorgans vorzugsweise wenigstens eine Führung vorgesehen. Die Führung ist vorzugsweise eine derart ausgebildete Schiene, daß die Träger bezüglich der Drehachsen der Gegenstände drehfest zwangsgeführt sind. Die Führung ist vorzugsweise eine nach oben offene U-Schiene und jeder Träger weist an seiner Unterseite ein Führungsstück auf, daß in der Schiene geführt ist und eine größere Länge als breite einnimmt.

Die vorbeschriebenen Führungen für die Träger können vor und nach dem Leitorgan insbesondere dann eingesetzt werden, wenn die Gegenstände um 180° oder ein ganzes Vielfaches von 180° gedreht werden sollen. Sollen dagegen die Gegenstände μm Zwischenwinkelstellungen verdreht werden, so muß insbesondere bei einer dem Leitorgan nachgeordneten Führung gewährleistet sein, daß das Führungsstück des Trägers und die Führung nach der Durchführung der Drehung um einen bestimmten Drehwinkel wieder zusammenpassen.

Dies kann beispielsweise dadurch gewährleistet sein, daß das Führungsstück die Drehung des Gegenstandes oder der Wälzelemente nicht mitvollzieht, oder daß jeder Träger an seiner Unterseite ein Führungstück aufweist, welches mehrere bezüglich der Drehachse des Gegenstandes drehversetzt angeordnete Führungskanäle zur Einführung der Führung hat. Dabei kann die Führung selbst beispielsweise als Führungssteg ausgebildet sein.

Ausführungsbeispiele, aus denen sich weitere erfinderische Merkmale ergeben, sind in der Zeichnung dargestellt. Es zeigen:

Fig. 1    eine Draufsicht auf einen Abschnitt einer Förderbahn einer erfindungsgemäßen Fördervorrichtung,

Fig. 2    einen Schnitt durch die Vorrichtung gemäß Fig. 1 entlang der in Fig. 1 mit II-II bezeichneten strichpunktierten Linie,

Fig. 3    ein zweites Ausführungsbeispiel einer Fördervorrichtung mit geänderter Trägerführung in einem Schnitt gemäß Fig. 2 und

Fig. 4    einen Schnitt durch einen Träger der Fördervorvorrichtung gemäß Fig. 3 entlang der in Fig. 3 mit IV-IV bezeichneten strichpunktierten Linie.

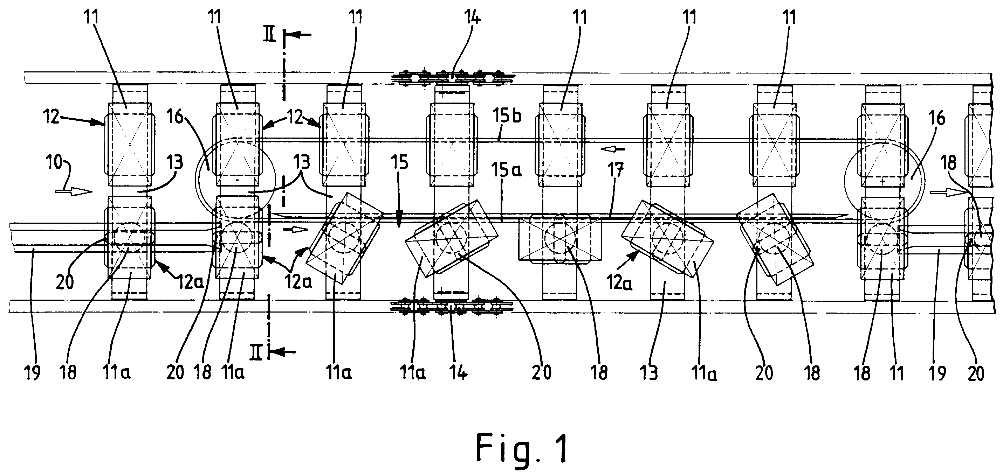

Fig. 1 zeigt eine Draufsicht auf einen Abschnitt einer Förderbahn einer Fördervorrichtung. In Förderrichtung 10 werden entlang der Förderbahn Packungen 11, 11a als Gegenstände in zwei Reihen nebeneinander transportiert. Die Packungen 11, 11a werden von Trägern 12, 12a getragen, die ihrerseits an Traversen 13 angeordnet sind, welche durch Förderketten 14 in Förderrichtung 10 bewegt werden.

Von den zweireihig geförderten Packungen 11, 11a sind die Packungen 11a einer Reihe - der im Zeichenbild unteren Reihe - auf drehbaren Trägern 12a angeordnet, um ein kontrolliertes Drehen der Packungen 11a mitsamt der Träger 12a beim Fördern zu ermöglichen.

Zur Drehung der Träger 12a ist als Leitorgan ein Gurt 15 mit Trums 15a, 15b vorgesehen, welcher endlos um Umlenkrollen 16 umläuft. Im Ausführungsbeispiel der Fig. 1 bewegt sich das erste Trum 15a des Gurtes 15 in Förderrichtung 10 und das zweite Trum 15b entgegen der Förderrichtung 10. Die zu drehenden Träger 12a sind dem ersten Trum 15a zugeordnet. Das erste Trum 15a wird an einer Führungsschiene 17 geführt.

Die drehbaren Träger 12a weisen jeweils radartig ausgebildete Wälzelemente 18 auf, die sich im Bereich des ersten Trums 15a des Gurtes 15 an diesem Trum 15a aufgrund der Relativgeschwindigkeit zwischen den geförderten Trägern 12a und dem Trum 15a abwälzen und dabei um ihre zur Förderbahn senkrechte Achse drehen. Die Wälzelemente 18 sitzen drehfest auf Wellen der Träger 12a, so daß sich die Träger 12a mit den Wälzelementen drehen.

Bei dem gezeigten Ausführungsbeispiel der Fördervorrichtung sind der Gurt 15 und radartige Wälzelemente 18 aufeinander abgestimmte Reibschlußelemente, nämlich ein Reibriemen und Reibräder. Dabei kann der Reibungswiderstand durch entsprechende Werkstoffwahl, insbesondere durch Beschichtung der Reibräder mit Gummi oder dergleichen, erhöht sein.

Das Leitorgan 15 und die Wälzelemente 18 könnten auch aufeinander abgestimmte Formschlußelemente sein. Die Wälzelemente 18 könnten beispielsweise Zahnräder sein und das Leitorgan 15 könnte ein umlaufender Zahnriemen oder eine Kette sein.

Außerhalb des Bereiches des Gurtes 15 sind als oben offene U-Schienen ausgebildete Führungen 19 vorgesehen, die unterhalb der Träger 12a verlaufen und in denen an den unteren Enden der Drehachsen der Träger 12a angeordnete, längliche Führungsstücke 20 gleitend führbar sind.

In dem in Fig. 1 dargestellten Ausführungsbeispiel werden die Träger 12a und somit auch die Packungen 11a entlang des Gurtes 15 um 180° gedreht, so daß die Führungsstücke 20 nach der Drehung wieder in die U-Schiene 19 einführbar sind, die dem Gurt 15 nachgeordnet ist.

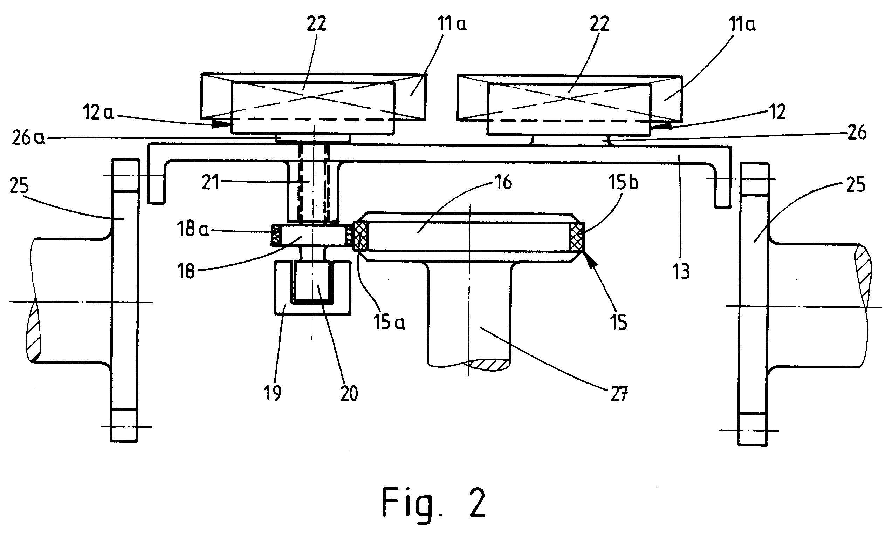

Fig. 2 zeigt einen Schnitt durch die Fördervorrichtung gemäß Fig. 1 entlang der in Fig. 1 mit II-II bezeichneten strichpunktierten Linie.

In dieser und in den nachfolgenden Figuren sind jeweils die gleichen Bauelemente mit den gleichen Bezugszahlen bezeichnet wie in Fig. 1.

In dieser Fig. 2 ist insbesondere zu erkennen, wie die Führungsstücke 20 in den U-Schienen 19 geführt sind und wie sich die Wälzelemente 18 an dem Trum 15a des Gurtes 15 abwälzen. Bei dem dargestellten Ausführungsbeispiel sind das Wälzelement 18 und das Trum 15a aufeinander abgestimmte Reibschlußelemente. Es ist zu erkennen, daß die Wälzelemente 18 als Reibräder mit Belägen 18a versehen sind, um den Reibungswiderstand zu erhöhen.

Weiter ist in der Fig. 2 zu erkennen, daß das Wälzelement 18 auf einer Welle 21 des Trägers 12a sitzt, die als Übertragungsglied zur Übertragung der Wälzbewegung des Wälzelementes 18 auf die Packung 11a dient. Der Träger 12a hat für diese Packung 11a eine Aufnahme, die als Tasche 22 ausgebildet ist und ein Verrutschen der Packung 11a bei der Drehbewegung verhindert. Die Tasche 22 hat einen U-profilförmigen Querschnitt, und die Packung 11a ist zwischen den Schenkeln dieses U-Profils eingelegt, bzw. eingeklemmt.

Die Träger 12 und 12a sind an den Traversen 13 angeordnet und miteinander verbunden. Die Traversen 13 werden über die Förderketten 14 durch Antriebsräder 25 angetrieben.

Beide Arten von Trägern 12 und 12a weisen Tellerelemente 26, 26a auf, auf denen die Aufnahmen 22 angeordnet sind. Die Tellerelemente 26 der nicht drehbaren Träger 12 sind fest auf den Traversen 13 angeordnet. Die Tellerelemente 26a der drehbaren Träger 12a liegen drehbar auf den Traversen 13 auf. An den Tellerelementen 26a sind die Wellen 21 angesetzt, die durch die Traversen 13 hindurchgeführt sind. Drehfest auf den Wellen 21 sitzen die Wälzelemente 18, und am Ende der Wellen 21 sitzen die Führungsstücke 20. Die Wellen 21 verlaufen koaxial zu den senkrechten Mittelachsen der Träger 12a und parallel zu den Wellen 27 der Umlenkrollen 16. Dabei haben die Ebene der Wellen 21 und die Ebene der Welle 27 einen solchen Abstand voneinander, daß die Wälzelemente 18 und das Trum 15a des Gurtes 15 Reibkontakt haben. Ein Ausweichen der Wellen 21 aus ihrer Ebene wird durch ihre Lagerung in den Traversen 13 und vor Erreichen des Gurtes 15 durch die Führung 19 verhindert.

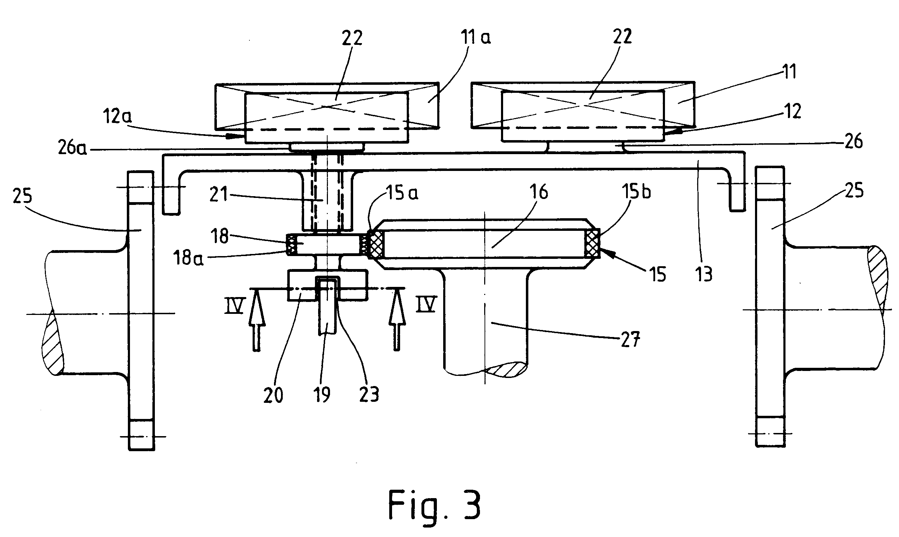

Fig. 3 zeigt ein zweites Ausführungsbeispiel einer Fördervorrichtung entsprechend der Darstellung der Fig. 2.

Das in Fig. 3 dargestellte Ausführungsbeispiel unterscheidet sich von dem in Fig. 2 dargestellten Ausführungsbeispiel lediglich durch die geänderte Ausbildung von Führungsstück 20 und Führungsschiene 19. Bei dem Ausführungsbeispiel gemäß Fig. 3 hat in kinematischer Umkehrung nun das Führungsstück 20 einen Führungskanal 23, in den die als Steg ausgebildete Führungsschiene 19 einführbar ist.

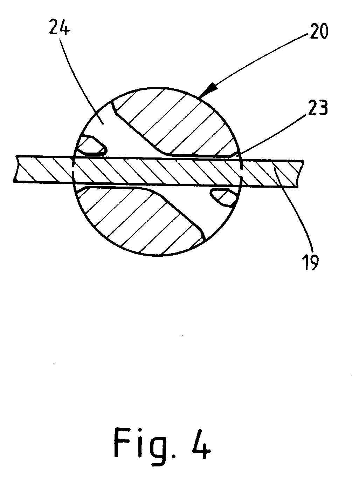

Fig. 4 zeigt einen Schnitt durch die Führungsschiene 19 und das Führungsstück 20 entlang der in Fig. 3 mit IV-IV bezeichneten strichpunktierten Linie.

In dieser Fig. 4 ist zu erkennen, daß das Führungsstück 20 mehrere Führungskanäle 23, 24 für unterschiedliche Drehstellungen des Trägers 12a zur Aufnahme der Führungsschiene 19 aufweist. Die Führungskanäle 23, 24 sind um die Welle 21 drehversetzt angeordnet, und zwar um den Winkel, der dem Drehwinkel entspricht, um den der Träger 12a und die Packung 11a vom Anfang bis zum Ende des Gurtes 15 gedreht werden sollen. Hierdurch ist gewährleistet, daß das Führungsstück 20 vor und nach der Drehung auf die jeweiligen Führungsschienen 19 vor und nach dem Gurt 15 paßt.

An ihren Enden sind die Führungskanäle 23, 24 an ihren Lotrechten Kanten jeweils abgefaßt, um das Einleiten des Führungssteges 19 zu erleichtern.

Der Drehwinkel α um den die Packung 11a beim Fördern gedreht werden soll läßt sich durch die Geometrie der Fördervorrichtung ausdrücken und letzten Endes auch vorgeben, wobei sich für den Drehwinkel α folgende einfache Beziehung ergibt:

$$\alpha = \frac{X \cdot 360}{D \cdot \pi}$$

Dabei ist X die Wegdifferenz zwischen dem Abstand der Wellen 27 der Umlenkrollen 16 und dem Weg, den ein Punkt auf dem Leitorgan 15 während der Zeit zurücklegt, während der ein Wälzelement 18 am Gurt anliegt. In dieser Wegdifferenz ist implizite die Geschwindigkeitsdifferenz zwischen dem Gurt 15 und der Fördergeschwindigkeit der Träger 12a enthalten.

D ist der Durchmesser des Wälzelementes 18.

Mit dieser Beziehung kann über das Einregeln der Geschwindigkeiten der gewünschte Drehwinkel vorgegeben werden.

**Patentansprüche**

1. Verfahren zur Förderung von Packungen entlang einer Förderbahn, wobei die Packungen (11, 11a) gedreht und dabei in zwei Reihen nebeneinander transportiert werden, **dadurch gekennzeichnet,** daß zur Änderung der Relativstellung benachbarter Packungen (11, 11a) jede Packung (11a) der einen Reihe um 180° gedreht wird und jede Packung (11) der anderen Reihe in ihrer Ausrichtung unverändert bleibt.

2. Verfahren nach Anspruch 1, dadurch gekennzeichnet, daß die zu drehenden Packungen (11a) der Reihe nach mit einer Relativgeschwindigkeit entlang eines sich in Förderrichtung (10) erstreckenden Leitorgans (15) derart bewegt werden, daß sich dabei Wälzelemente (18) am Leitorgan (15) abwälzen, wobei die Wälzbewegungen der Wälzelemente in die Drehungen der jeweils zugeordneten Packungen (11a) umgesetzt werden.

3. Verfahren nach Anspruch 2, dadurch gekennzeichnet, daß das Leitorgan (15) in seiner Erstreckungsrichtung bewegt wird.

4. Verfahren nach Anspruch 3, dadurch gekennzeichnet, daß das Leitorgan (15) um eine zur Förderrichtung senkrechte Achse endlos umgelenkt wird.

5. Verfahren nach Anspruch 3 oder 4, dadurch gekennzeichnet, daß das Leitorgan (15) in Bewegungsrichtung geführt wird.

6. Verfahren nach einem der vorhergehenden Ansprüche, dadurch gekennzeichnet, daß die Wälzelemente (18) aufweisenden Träger (12) für die Gegenstände (11, 11a) außerhalb des Bereiches des Leitorgans (15) in Förderrichtung geführt werden.

7. Fördervorrichtung mit einer Förderbahn zur Förderung von Packungen in zwei Reihen nebeneinander, wobei zur Aufnahme der Packungen (11, 11a) zwei Reihen von Trägern (12, 12a) vorgesehen sind und die Träger (12a) einer Reihe während der Förderung um eine zur Förderbahn senkrechte Achse drehbar sind, dadurch gekennzeichnet, daß nur die Träger (12a) der einen Reihe drehbar sind, während die Träger (12) der anderen Reihe nicht drehbar sind.

8. Fördervorrichtung nach Anspruch 7, dadurch gekennzeichnet, daß aufeinanderfolgend förderbare Traversen (13) mit jeweils einem drehbaren Träger (12a) und einem fest angeordneten Träger (12) vorgesehen sind, wobei die Träger (12a) für die zu drehenden Packungen (11a) vorzugsweise an einem sich in Förderrichtung erstreckenden Leitorgan (15) abwälzbare Wälzelemente (18) und Übertragungsglieder (21) zur Übertragung der Wälzbewegungen auf die Packungen (11a) aufweisen.

9. Fördervorrichtung nach Anspruch 8, dadurch gekennzeichnet, daß das Leitorgan (15) und die Wälzelemente (18) aufeinander abgestimmte Reibschlußelemente oder Formschlußelemente sind.

10. Fördervorrichtung nach einem der Ansprüche 7 bis 9, dadurch gekennzeichnet, daß die drehbaren Träger (12a) der einen Reihe um 180° oder ein Vielfaches hiervon drehbar sind.

11. Fördervorrichtung nach einem der Ansprüche 8 bis 10, dadurch gekennzeichnet, daß das Leitorgan (15) zu einer Bewegung in seiner Erstreckungsrichtung antreibbar ist.

12. Fördervorrichtung nach Anspruch 11, dadurch gekennzeichnet, daß das Leitorgan (15) ein endlos umlaufender Strang ist.

**13.** Fördervorrichtung nach einem der Ansprüche 7 bis 12, dadurch gekennzeichnet, daß jeder Träger (12a) für einen Gegenstand (11a) um seine eigene zur Förderrichtung senkrechte Achse drehbar ist und daß das zugehörige Wälzelement (18) drehfest auf einer entsprechenden Welle (21) sitzt.

**14.** Fördervorrichtung nach einem der Ansprüche 7 bis 13, dadurch gekennzeichnet, daß jeder Träger (12a) eine Aufnahme (22) für den Gegenstand (11a) aufweist.

**15.** Fördervorrichtung nach einem der Ansprüche 11 bis 14, dadurch gekennzeichnet, daß das Leitorgan (15) in seiner Bewegungsrichtung, vorzugsweise an seiner den Wälzelementen (18) abgewandten Seite, geführt ist, wobei die Führung vorzugsweise eine Schiene (17) ist.

**16.** Fördervorrichtung nach einem der Ansprüche 7 bis 15, dadurch gekennzeichnet, daß außerhalb des Erstreckungsbereiches des Leitorgans (15) wenigstens eine Führung für die Träger (12a) vorgesehen ist.

**17.** Fördervorrichtung nach Anspruch 16, dadurch gekennzeichnet, daß die Führung eine Schiene (19) ist, entlang der die Träger (12a) bezüglich der Drehachsen (21) der Gegenstände (11a) drehfest zwangsgeführt sind.

**18.** Fördervorrichtung nach Anspruch 17, dadurch gekennzeichnet, daß die Schiene (19) unterhalb der Träger (12a) verläuft und eine nach oben offene U-Schiene ist, und daß jeder Träger (12a) an seiner Unterseite ein Führungsstück (20) aufweist, das in der Schiene (19) geführt ist und eine größere Länge als Breite einnimmt.

**19.** Fördervorrichtung nach Anspruch 17, dadurch gekennzeichnet, daß jeder Träger (12a) an seiner Unterseite ein Führungsstück (20) aufweist, welches mehrere bezüglich der Drehachse (21) des Gegenstandes (11a) drehversetzt angeordnete Führungskanäle (23, 24) zur Einführung der Führung (19) hat.

**20.** Fördervorrichtung nach einem der Ansprüche 16 bis 19, dadurch gekennzeichnet, daß dem Leitorganbereich eine Führung (19) für die Träger (12a) vorgeordnet und eine Führung (19) nachgeordnet ist.

**Claims**

**1.** Process for the conveyance of packages along a conveying path, the packages (11, 11a) being turned and, during this operation, being transported adjacently in two rows, characterized in that, to change the relative position of adjacent packages (11, 11a), each package (11a) of the one row is turned by 180° and each package (11) of the other row remains unchanged in its alignment.

**2.** Process according to Claim 1, characterized in that the packages (11a) to be turned are moved in sequence at a relative speed along a guide organ (15) extending in the conveying direction (10) in such a way that roller elements (18) thereby roll off on the guide organ (15), the roller movements of the roller elements being converted into the turns of the respective associated packages (11a).

**3.** Process according to Claim 2, characterized in that the guide organ (15) is moved in the direction of its extension.

**4.** Process according to Claim 3, characterized in that the guide organ (15) is deflected endlessly about an axis perpendicular to the conveying direction.

**5.** Process according to one of Claims 3 or 4, characterized in that the guide organ (15) is guided in the direction of movement.

**6.** Process according to one of the preceding claims, characterized in that carriers (12) having the roller elements (18) for the objects (11, 11a) are guided in the conveying direction outside the region of the guide organ (15).

**7.** Conveying apparatus having a conveying path for conveying packages adjacently in two rows, two rows of carriers (12, 12a) being provided to receive the packages (11, 11a), and it being possible for the carriers (12a) of one row to be turned during the conveyance about an axis perpendicular to the conveying path, characterized in that only the carriers (12a) of the one row can be turned while the carriers (12) of the other row cannot be turned.

**8.** Conveying apparatus according to Claim 7, characterized in that transverse bars (13) are provided, which can be conveyed successively and each have a rotatable carrier (12a) and a fixedly arranged carrier (12), the carriers (12a) for the packages (11a) to be turned having roller elements (18), which can preferably roll off on a guide organ (15) extending in the conveying direction, and transfer members (21) to transfer the roller movements to the packages (11a).

9. Conveying apparatus according to Claim 8, characterized in that the guide organ (15) and the roller elements (18) are positive-locking elements or frictionally engaged elements adapted to one another.

10. Conveying apparatus according to one of Claims 7 to 9, characterized in that the rotatable carriers (12a) of the one row can be turned by 180° or a multiple thereof.

11. Conveying apparatus according to one of Claims 8 to 10, characterized in that the guide organ (15) can be driven to effect a movement in the direction of its extension.

12. Conveying apparatus according to Claim 11, characterized in that the guide organ (15) is an endlessly circulating run.

13. Conveying apparatus according to one of Claims 7 to 12, characterized in that each carrier (12a) for one object (11a) is rotatable about its own axis perpendicular to the conveying direction, and in that the associated roller element (18) is seated fixedly in terms of rotation on a corresponding shaft (21).

14. Conveying apparatus according to one of Claims 7 to 13, characterized in that each carrier (12a) has a receptacle (22) for the object (11a).

15. Conveying apparatus according to one of Claims 11 to 14, characterized in that the guide organ (15) is guided in its direction of movement, preferably at its side facing away from the roller elements (18), the guide preferably being a rail (17).

16. Conveying apparatus according to one of Claims 7 to 15, characterized in that at least one guide for the carriers (12a) is provided outside the region of extension of the guide organ (15).

17. Conveying apparatus according to Claim 16, characterized in that the guide is a rail (19), along which the carriers (12a) are forcibly guided fixedly in terms of rotation with regard to the axes (21) of rotation of the objects (11a).

18. Conveying apparatus according to Claim 17, characterized in that the rail (19) extends below the carriers (12a) and is a U-shaped rail, open at the top, and in that each carrier (12a) has on its underside a guide piece (20) which is guided in the rail (19) and assumes a greater length than width.

19. Conveying apparatus according to Claim 17, characterized in that each carrier (12a) has on its underside a guide piece (20) which has a plurality of guide channels (23, 24) arranged offset in terms of rotation with regard to the axis (21) of rotation of the object (11a) for the introduction of the guide (19).

20. Conveying apparatus according to one of Claims 16 to 19, characterized in that a guide (19) for the carriers (12a) is arranged before the region of the guide organ and a guide (19) is arranged after it.

**Revendications**

1. Procédé pour transporter des emballages le long d'une bande transporteuse, les emballages (11, 11a) étant soumis à pivotement et y étant transportés les uns à côté des autres, sur deux rangées, caractérisé en ce que, pour modifier la position relative des emballages (11, 11a) voisins, on fait pivoter chaque emballage (11a) de l'une des rangées de 180° et chaque emballage (11) de l'autre rangée demeure d'orientation inchangée.

2. Dispositif selon la revendication 1, caractérisé en ce que les emballages (11a) à faire pivoter, selon la rangée, sont déplacés à une vitesse relative, le long d'un organe de guidage (15) s'étendant dans la direction de transport (10), de telle sorte que des éléments à rouleaux (18) roulent alors sur l'organe de guidage (15), les mouvements de roulement des éléments à rouleaux étant transformés en pivotement de chacun des emballages (11a) associés.

3. Dispositif selon la revendication 2, caractérisé en ce que l'organe de guidage (15) est déplacé dans sa direction longitudinale.

4. Dispositif selon la revendication 3, caractérisé en ce que l'organe de guidage (15) est renvoyé, sans fin, autour d'un axe perpendiculaire à la direction de transport.

5. Dispositif selon la revendication 3 ou 4, caractérisé en ce que l'organe de guidage (15) est guidé dans la direction de déplacement.

6. Dispositif selon l'une des revendications précédentes, caractérisé en ce que les supports (12), destinés aux objets (11, 11a) et présentant les éléments à rouleaux (18), sont guidés dans la direction du transport à l'extérieur de la zone de l'organe de guidage (15).

7. Dispositif de transport avec une bande de transport pour transporter des emballages, placés les uns à côté des autres sur deux rangées, deux rangées de supports (12, 12a) étant prévues pour supporter les emballages (11, 11a) et les supports (12a) d'une rangée peuvent pivoter pendant le transport, autour d'un axe perpendiculaire à la bande de transport, caractérisé en ce que seuls les supports (12a) de l'une des rangées peuvent pivoter, alors que les supports (12) de l'autre rangée ne peuvent pas pivoter.

8. Dispositif selon la revendication 7, caractérisé en ce que sont prévues des traverses (13) transportables les unes à la suite des autres avec chacune un support (12a) pivotant et un support (12) fixe, les supports (12a) destinés aux emballages (11a) à faire pivoter présentant des éléments à rouleaux (18) pouvant rouler, de préférence, sur un organe de guidage (15) s'étendant dans la direction du transport et des organes de transmission (21), pour transmettre les déplacements de roulement aux emballages (11a).

9. Dispositif de transport selon la revendication 8, caractérisé en ce que l'organe de guidage (15) et l'élément à rouleaux (18) sont des éléments à liaison par friction ou par ajustement de forme, conçus l'un en fonction de l'autre.

10. Dispositif de transport selon l'une des revendications 7 à 9, caractérisé en ce que les supports pivotants (12a) de l'une des rangées peuvent pivoter de 180° ou d'un multiple de 180°.

11. Dispositif de transport selon l'une des revendications 8 à 10, caractérisé en ce que l'organe de guidage (15) peut être entraîné en mouvement dans sa direction longitudinale.

12. Dispositif de transport selon la revendication 11, caractérisé en ce que l'organe de guidage (15) est un cordage circulant sans fin.

13. Dispositif de transport selon l'une des revendications 7 à 12, caractérisé en ce que chaque support (12a) prévu pour un objet (11a) peut pivoter autour de son propre axe, perpendiculaire à la direction de transport, et en ce que l'élément à rouleaux (18) afférent est placé bloqué, en rotation, sur un arbre (21) correspondant.

14. Dispositif de transport selon l'une des revendications 7 à 13, caractérisé en ce que chaque support (12a) présente un logement (22) pour l'objet (11a).

15. Dispositif de transport selon l'une des revendications 11 à 14, caractérisé en ce que l'organe de guidage (15) est guidé dans sa direction de déplacement, de préférence sur sa face opposée aux éléments à rouleaux (18), le guidage étant, de préférence, constitué par une glissière (17).

16. Dispositif de transport selon l'une des revendications 7 à 15, caractérisé en ce qu'au moins un guidage pour les supports (12a) est prévu à l'extérieur de la zone d'extension de l'organe de guidage (15).

17. Dispositif de transport selon la revendication 16, caractérisé en ce que le guidage est une glissière (19), le long de laquelle les supports (12a) sont guidés de force, fixés en rotation par rapport aux axes de rotation (21) des objets (11a).

18. Dispositif de transport selon la revendication 17, caractérisé en ce que la glissière (19) s'étend au-dessous des supports (12a) et est constituée par une glissière en U ouverte vers le haut, et en ce que chaque support (12a) présente en face inférieure une partie de guidage (20), guidée dans la glissière (19) et occupant une longueur supérieure à la largeur.

19. Dispositif de transport selon la revendication 17, caractérisé en ce que chaque support (12a) présente en face inférieure une partie de guidage (20), qui a plusieurs canaux de guidage (23, 24), décalés en rotation relativement à l'axe de rotation (21) de l'objet (11a), pour permettre l'introduction dans le guidage (19).

20. Dispositif de transport selon l'une des revendications 16 à 19, caractérisé en ce qu'un guidage (19) pour les supports (12a) est disposé en amont de la zone de l'organe de guidage et un guidage (19) est disposé en aval de cette zone.

Fig. 1

Fig. 2

EP 0 396 979 B1

Fig. 3

EP 0 396 979 B1

Fig. 4